Europäisches Patentamt

European Patent Office

Office européen des brevets

(11) Veröffentlichungsnummer: **0 470 441 A2**

# EUROPÄISCHE PATENTANMELDUNG

(21) Anmeldenummer: **91112440.2**

(51) Int. Cl.5: **G05B 19/405**

(22) Anmeldetag: **24.07.91**

(30) Priorität: **06.08.90 DE 4024940**

(43) Veröffentlichungstag der Anmeldung:
**12.02.92 Patentblatt 92/07**

(84) Benannte Vertragsstaaten:
**DE FR GB IT NL SE**

(71) Anmelder: **SIEMENS AKTIENGESELLSCHAFT**
**Wittelsbacherplatz 2**
**W-8000 München 2(DE)**

(72) Erfinder: **Kreuzer, Wolfgang**
**Im Stöckig 100**
**W-8510 Fürth(DE)**

(54) Verfahren zum Übertragen eines Zustimmungssignals für den Betrieb eines Roboters.

(57) Damit erkannt werden kann, ob ein Zustimmungssignal von einem Programmierhandgerät (PHG) ohne eine Störung an eine Robotersteuerung (RS) gelangt, wird das Zustimmungssignal mit einem Hilfssignal moduliert, dessen ständiges Vorliegen am Ort der Robotersteuerung (RS) überwacht wird. Liegt das Hilfssignal vor, werden die Zustimmungssignale akzeptiert. Liegt das Hilfssignal nicht mehr vor, wird ein NOT-AUS ausgelöst. Die Führung des Signalflusses erfolgt ferner aus Sicherheitsüberlegungen her aus zweikanalig.

FIG 1

EP 0 470 441 A2

Die Erfindung bezieht sich auf ein Verfahren zum Übertragen eines Zustimmungssignals für den Betrieb eines Roboters, wobei das Zustimmungssignal als binäres Signal "Zustimmung liegt vor" bzw. "Zustimmung liegt nicht vor" über ein Leitungssystem von einem Programmierhandgerät zur eigentlichen Steuerung des Roboters übertragen wird.

Ein Verfahren dieser Art wird beispielsweise beim Betrieb von Einrichtungen gemäß dem deutschen Gebrauchsmuster 88 06 214 benutzt. Dabei wird stets dann ein über ein Programmierhandgerät vorgegebener Bewegungsvorgang des Roboters auch tatsächlich ausgelöst, wenn vom Bediener des Programmierhandgerätes ein Zustimmungssignal durch Betätigen eines von drei Zustimmungstastern veranlaßt wird. Sofern diese Zustimmungstaster nicht in eine definierten Stellung gesetzt werden, sei es, daß der Bediener den jeweiligen Zustimmungstaster losläßt oder sei es, daß der Bediener den jeweiligen Zustimmungstaster sozusagen krampfartig betätigt, wird sichergestellt, daß keine Bewegung des Roboters erfolgt. Es ist jedoch möglich, daß seitens des Bedieners wieder durch ordnungsgemäßes Betätigen eines der Zustimmungstaster eine unterbrochene Bewegung des Roboters wieder neu gestartet werden kann. Hierin unterscheidet sich die Funktion der Zustimmungstaster von der eines NOT-AUS-Betätigungsgliedes. Dessen Auslösen führt nämlich stets in einen Zustand der Selbsthaltung, der nur durch ganz definierte Betätigungshandlungen reversiert werden kann.

Dem oben Dargelegten ist aber auch entnembar, daß die Übertragung der Zustimmungssignale dennoch von sicherheitstechnischer Bedeutung für den Betrieb eines Roboters ist.

Aufgabe der Erfindung ist es, ein Verfahren der eingangs genannten Art so auszubilden, daß die Zustimmungssignale, d.h. das Signal "Zustimmung liegt vor" bzw. das Signal "Zustimmung liegt nicht vor" sicher vom Ort des Programmierhandgerätes an den Ort der eigentlichen Robotersteuerung übertragen werden können.

Gemäß der Erfindung wird diese Aufgabe dadurch gelöst, daß am Ort des Programmierhandgerätes dem Zustimmungssignal ein Hilfssignal hinzugefügt wird, daß am Ort der Steuerung detektiert wird, ob das Hilfssignal noch übertragen wird und daß nur bei Vorliegen des Hilfssignals ein gleichzeitig in der Steuerung eingehendes Zustandsignal als ordnungsgrechtes Zustandssignal akzeptiert wird, jedoch bei Nichtvorliegen des Hilfssignals ein NOT-AUS-Befehl ausgelöst wird. Hierdurch erfolgt bei einer Störung der Übertragung des Zustimmungssignals ein Rückgriff auf die sicherste Stufe des Systems, nänmlich den Zustand NOT-AUS.

Eine erste vorteilhafte Ausbildung der Erfindung ist dadurch gekennzeichnet, daß, solange ein Programmierhandgerät noch nicht angeschlossen ist, am Ort der Steuerung unter Zuhilfenahme eines ebenfalls das Hilfssignal liefernden Generators ein ordnungsgerecht mit dem Hilfssignal versehenes Zustimmungssignal "Zustimmung liegt nicht vor" nachgebildet wird. Damit ist eine fortlaufende Überwachung der am Ort der Steuerung vorliegenden Komponenten, die ansonsten zur Verarbeitung des Zustimmungssignals vom Programmierhandgerät vorgesehen sind, gewährleistet.

Dadurch, daß die Zustimmungssignale des Programmierhandgerätes nach einem Anschließen des Programmierhandgerätes erst nach Ablauf einer vorgegebenen Verzögerungszeit in der Steuerung wirksamgeschaltet werden, ist sichergestellt, daß keine kurzfristigen Unterbrechungen des Hilfssignals durch einen zeitverzögerten Aufbau der Versorgungsspannungen für das Programmierhandgerät verursacht werden.

Dadurch, daß das Leitungssystem in einer sicherheitstechnisch ausgelegten Zweikanaltechnik ausgebildet ist, kann trotz Verwendung üblicher Komponenten ein sehr hohes Sicherheitsniveau erfüllt werden.

Ein Ausführungsbeispiel der Erfindung ist in der Zeichnung dargestellt und wird im folgenden näher erläutert. Dabei zeigen:

FIG 1 ein Strukturbild und die

FIG 2 und 3 einige signifikante Signalverläufe.

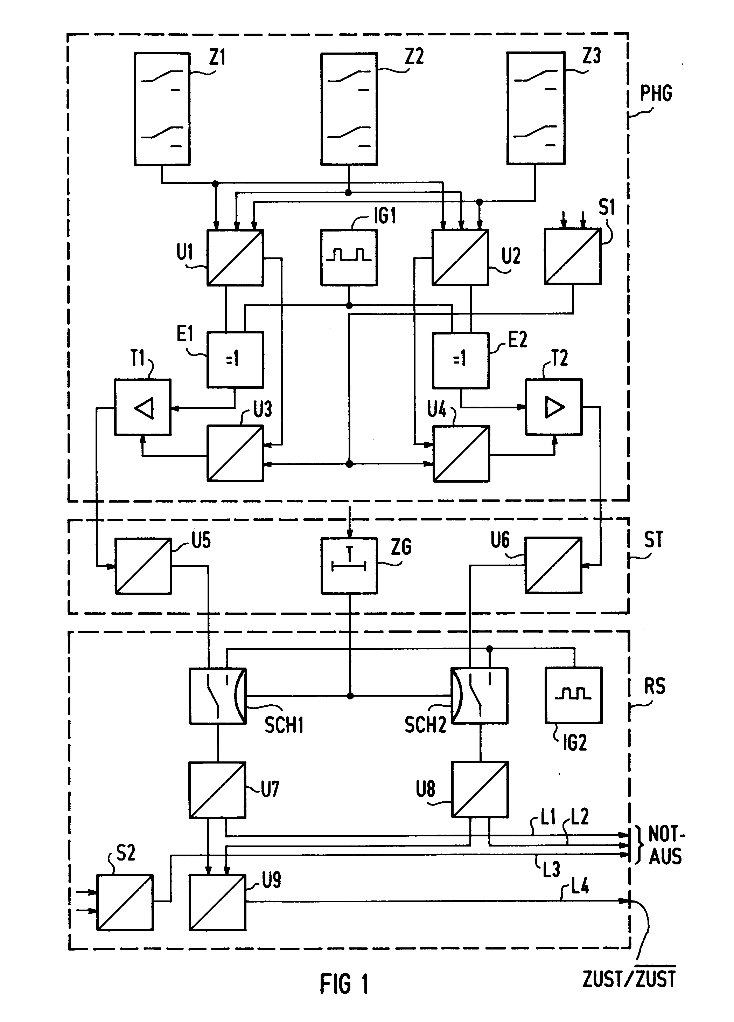

In der Darstellung gemäß FIG 1 sind gestrichelt ein Programmierhandgerät PHG, eine Steuertafel ST und eine eigentliche Robotersteuerung RS mit ihren für die Erfindung relevanten Elementen gezeigt.

Im Programmierhandgerät PHG sind drei Zustimmungstaster Z1, Z2 und Z3 vorgesehen, die jeweils identisch ausgebildet sind. Jeder dieser Zustimmungstaster Z1 bis Z3 kann in drei Stellungen bewegt werden, nämlich in eine Stellung "AUS" eine Stellung "IN" und eine Stellung "PANIK". Prinzipiell können diese drei Stellungen auch durch einen Dreilagenschalter entsprechend dem deutschen Gebrauchsmuster 88 12 349 realisiert werden, jedoch hat es sich als zweckmäßig erwiesen, anstelle eines spezifizierten Dreistellungsschalters jeweils von zwei handelsüblichen Zweistellungsschaltern Gebrauch zu machen, die in ihrem Zusammenwirken ebenfalls die drei obengenannten Stellungen angeben können.

Wenn man die beiden möglichen Stellungen der Schalter jeweils mit "0" und "1" annimmt, gibt die Stellung "0" für beide Schaltern den Zustand "AUS" an, die Stellung 1 für den ersten Schalter und die Stellung "0" für den zweiten Schalter weist auf den Zustand "EIN" hin, die Stellung "1" für beide Schalter weist auf "PANIK" hin und die Stellung "0" für den ersten Schalter und die gleichzeitige Stellung "1" für den zweiten Schalter würde nur bei Auftreten einer Fehlschaltung ("FEHLER") vorliegen.

Diese logischen Zusammenhänge können jeweils in einem Umsetzer U1 bzw. U2 detektiert werden. Beide Umsetzer U1 und U2 arbeiten dabei aus Sicherheitsgründen parallel, gegebenenfalls in diversitärer Technik. Sofern einer der Zustimmungstaster Z1 bis Z3 die obengenannte Stellung "EIN" aufweist, wird ein Signal logisch "1" sowohl vom Umsetzer U1 als auch vom Umsetzer U2 ausgelöst und an den ersten Eingang eines EX-OR-Gliedes E1 bzw. E2 geleitet. Sofern eine Zustimmung nicht vorliegt ("AUS", "PANIK") wird ein Signal logisch "0" am Ausgang des Umsetzers U1 und am Ausgang des Umsetzers U2 abgegeben. Sofern eine Situation "FEHLER" der Zustimmungsschalter Z1, Z2 oder Z3 vorliegt oder auch, wenn gleichzeitig mehr als einer der Zustimmungsschalter Z1 bis Z3 betätigt wird, löst der Umsetzer U1 bzw. der Umsetzer U2 ein Störungssignal aus, das einem Umsetzer U3 bzw. U4 zugeleitet wird. Dieser jeweilige Umsetzer U3 bzw. U4 wird auch davon in Kenntnis gesetzt, wenn seitens eines Spannungswächters S1 festgestellt wird, daß definierte Spannungszustände im Programmierhandgerät PHG nicht vorliegen. In beiden Fällen wird seitens des Umsetzers U3 bzw. U4 ein Sperrsignal für eine Treiberstufe T1 bzw. T2 ausgelöst, die im Pfad zur Übertragung des Zustimmungssignals angeordnet ist.

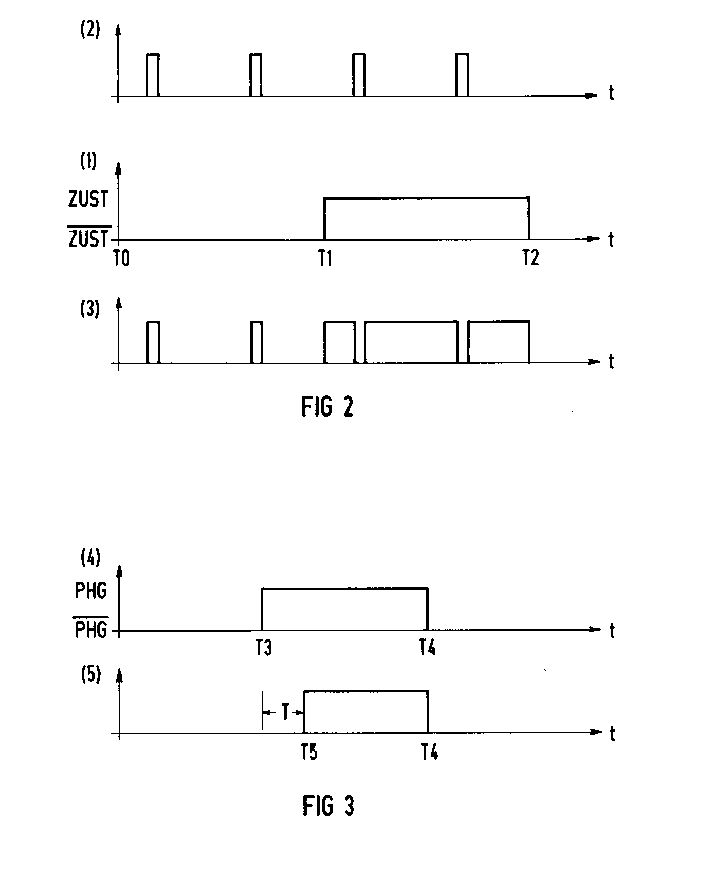

Im Programmierhandgerät PHG ist ferner als wesentliche Komponente des Sicherheitskonzeptes ein Impulsgenerator IG1 vorgesehen, der beispielsweise in einem Puls-Pausen-Verhältnis von 11 % ein Hilfssignal an die zweiten Eingänge der EX-OR-Glieder E1 und E2 leitet. In den EX-OR-Gliedern E1 und E2 werden dadurch die Zustimmungssignale mit dem Signal des Impulsgenerators IG1 so moduliert, wie dies in der Darstellung gemäß FIG 2 dargestellt ist.

In der Darstellung gemäß FIG 2 sind dazu drei Signalverläufe zeitgleich zueinander angeordnet. Im mittleren Signalverlauf (1) möge angenommen sein, daß über eine Zeit t, beginnend ab einer Zeit T0 bis zu einer Zeit T1 ein Zustand "Zustimmung liegt nicht vor" ansteht und vom Zeitpunkt T1 bis zu einem Zeitpunkt T2 der Zustand "Zustimmung liegt vor" ansteht. Das Signal (2) am Ausgang des Impulsgenerators IG1 ist oberhalb des eben geschilderten Signalverlaufs (1) angedeutet. Die Vermischung beider Signalverläufe führt zu einem Signal (3), wie dieses im unteren Teil von FIG 2 gezeigt ist. Zurück zu FIG 1.

Das Ausgangssignal des EX-OR-Gliedes E1 bzw. E2 wird der Treiberstufe T1 bzw. T2 zugeleitet. Von dort gelangt dieses Signal an die Steuertafel ST und kann dort beispielsweise in Umsetzern U5 und U6 entsprechend der zu überbrückenden Entfernung umgeformt werden. Am Ort der Steuertafel ST ist ferner ein Zeitglied ZG vorgesehen, das immer dann, wenn das Programmierhandgerät PHG angeschlossen wird, nach Ablauf einer Zeitspanne T Schaltstufen SCH1 und SCH2 der Robotersteuerung RS so schaltet, daß die in der Darstellung gezeigte Schalterstellung der Schaltstufen SCH1 und SCH2 eingenommen wird. (Auf die Signalzustände am Zeitglied ZG wird weiter unten noch eingegangen.) In dieser Stellung gelangen die Ausgangssignale der Umsetzer U5 und U6 über die Schaltstufen SCH1 und SCH2 an Umsetzer U7 und U8, in denen im Hinblick auf das Sicherheitskonzept detektiert wird, ob das Hilfssignal, das vom Impulsgenerator IG1 ausgesandt wurde, noch als eine Modulation der Zustandssignale vorliegt oder ob dies nicht der Fall ist. Sofern es nämlich nicht mehr vorliegt, muß unverzüglich über eine Leitung L1 bzw. L2 ein NOT-AUS ausgelöst werden, da nämlich entweder ein Defekt der dargestellten Schaltelemente vorliegt oder aber eine Unterbrechung der Leitungsführung zwischen den einzelnen Geräten erfolgt ist. Wenn das Hilfssignal jedoch noch vorhanden ist, wird seitens des Umsetzers U7 bzw. des Umsetzers U8 auch das Zustimmungssignal als "Zustimmung liegt vor" oder "Zustimmung liegt nicht vor" detektiert. Ein dementsprechendes Signal gelangt dann an einen Umsetzer U9, der dann, wenn auch beide Ausgangssignale der Umsetzer U7 und U8 bezüglich des Zustimmungssignals auf eine gleiche Zustimmung hinweisen, ein resultierendes Zustimmungssignal "Zustimmung liegt vor" bzw. "Zustimmung liegt nicht vor" über eine Leitung L4 an der Übersichtlichkeit halber nicht dargestellte Schaltungsglieder der Robotersteuerung RS bzw. des Roboters weiterleitet.

In der Robotersteuerung RS kann ebenso wie im Programmierhandgerät PHG noch ein Spannungwächter S2 vorgesehen sein, dessen Ansprechen aufgrund von Störungen des zu erwartenden Spannungsverlaufs ebenfalls ein NOT-AUS, in diesem Fall über eine Leitung L3, auslöst.

Sofern das Programmierhandgerät PHG von der Steuertafel ST getrennt wird, gelangt das Hilfssignal des Impulsgenerators IG1 selbstverständlich nicht mehr an die Umsetzer U7 bzw. U8. Ein Ausfall des Hilfssignals aus dem Programmierhandgerät PHG würde jedoch zu einem NOT-AUS führen, obwohl eigentlich nur eine übliche Bedienmaßnahme erfolgt. Um dies zu vermeiden, wird beim Abtrennen des Programmierhandgeräts PHG von der Steuertafel ST ein Impulsgenerator IG2 der Robotersteuerung RS wirksamgeschaltet, der ebenfalls ein dem Hilfssignal des Impulsgenerators IG1 entsprechendes Signal generiert.

Um diesen Sachverhalt zu veranschaulichen, ist in der Darstellung gemäß FIG 3 das Ansprechen des Zeitgliedes ZG verdeutlicht. In einem oberen Teil (4) der Darstellung gemäß FIG 3 sind Signale "Programmierhandgerät nicht vorhanden" und "Programmierhandgerät" angeschlossen längst einer Zeit t dargestellt. Der Zustand "Programmierhandgerät angeschlossen" möge dabei zwischen den Zeiten T3 und T4 vorliegen. Ein diesbezügliches Signal kann beispielsweise mit dem Ziehen des Steckers für das Programmierhandgerät PHG über Steckerbrücken generiert werden. Wenn ein derartiges Signal dem Zeitglied ZG zugeleitet wird, erfolgt in diesem eine Einschaltflankenverzögerung um eine Zeit T und es ergibt sich dementsprechend ein Signal (5), das zwischen den Zeiten T5 und T4 die Schalterstellung der Schaltstufen SCH1 und SCH2 auslöst, wie diese in der Darstellung gemäß FIG 1 angedeutet ist. Ansonsten sind die Schaltstufen SCH1 und SCH2 in der nicht dargestellten Umschaltstellung betrieben.

In der dargestellten Stellung gelangen die Hilfsignale des Impulsgenerators IG1 an den Umsetzer U7 bzw. U8. In der nicht dargestellten Schalterstellung trifft dies für die Impulse des Impulsgenerators IG2 zu.

Bei der Übertragung der Zustimmungssignale wird stets von einem zweikanligen Signalfluß ausgegangen und die einzelnen Elemente in den Kanälen sind aus sicherheitstechnischen Gründen in diversitäre Technik ausgebildet.

Selbstverständlich ist es auch möglich, die von den Umsetzern U1 und U2 generierten Zustimmungssignale noch über weitere Signalpfade an zusätzliche Sicherheitseinrichtungen oder aber an spezielle Datenverarbeitungseinrichtungen des Systems weiterzuleiten.

**Patentansprüche**

1.  Verfahren zum Übertragen eines Zustimmungssignals für den Betrieb eines Roboters, wobei das Zustimmungssignal als binäres Signal "Zustimmung liegt vor" bzw. "Zustimmung liegt nicht vor" über ein Leitungssystem von einem Programmierhandgerät zur eigentlichen Steuerung des Roboters übertragen wird, **dadurch gekennzeichnet**, daß am Ort des Programmierhandgerätes (PHG) dem Zustimmungssignal ein Hilfssignal hinzugefügt wird, daß am Ort der Steuerung (RS) detektiert wird, ob das Hilfssignal noch übertragen wird und daß nur bei Vorliegen des Hilfssignals ein gleichzeitig in der Steuerung eingehendes Zustandsignal als ordnungsgerechtes Zustandssignal akzeptiert wird, jedoch bei Nichtvorliegen des Hilfssignals ein NOT-AUS-Befehl ausgelöst wird.

2.  Verfahren nach Anspruch 1, **dadurch gekennzeichnet**, daß, solange ein Programmierhandgerät (PHG) noch nicht angeschlossen ist, am Ort der Steuerung (RS) unter Zuhilfenahme eines ebnenfalls das Hilfssignal liefernden Generators (IG2) ein ordnungsgerecht mit dem Hilfssignal versehenes Zustimmungssignal "Zustimmung liegt nicht vor" nachgebildet wird.

3.  Verfahren nach Anspruch 2, **dadurch gekennzeichnet**, daß die Zustimmungssignale des Programmierhandgerätes (PHG) nach einem Anschließen des Programmierhandgerätes (PHG) erst nach Ablauf einer vorgegebenen Verzögerungszeit in der Steuerung (RS) wirksamgeschaltet werden.

4.  Verfahren nach Anspruch 1, 2 oder 3, **dadurch gekennzeichnet**, daß das Leitungssystem in einer sicherheitstechnisch ausgelegter Zweikanaltechnik ausgebildet ist.

FIG 1

(2)

FIG 2

(1)

(3)

FIG 3

(4)

(5)